# EUROPEAN PATENT SPECIFICATION

(11) **EP 3 505 816 B1**
(45) Date of publication and mention of the grant of the patent: **09.04.2025**
(21) Application number: 18215843.6
(22) Date of filing: 24.12.2018
(51) Int. Cl.: F21S 41/37, C23C 28/02, F21S 41/689, F21S 45/10, F21S 41/47

(54) **AN OPTICAL CONVERSION DEVICE**
OPTISCHE UMWANDLUNGSVORRICHTUNG
DISPOSITIF DE CONVERSION OPTIQUE

(30) Priority: 26.12.2017 CN 201711434070; 26.12.2017 CN 201711437920
(43) Date of publication of application: 03.07.2019
(73) Proprietor: Johnson Electric International AG, 3280 Murten (CH)
(72) Inventor: Gu, Huanfei, Hong Kong (HK)
(74) Representative: Hocking, Adrian Niall

(56) References cited:
- EP-A1- 2 620 325
- EP-A2- 1 746 340
- CN-A- 102 853 379
- CN-U- 207 555 487
- FR-A1- 2 796 647
- FR-A1- 3 025 859
- KR-A- 20160 012 326
- KR-B1- 101 717 692
- US-A- 4 686 610
- US-A1- 2009 296 419
- US-A1- 2012 080 699

## Description

### FIELD OF THE INVENTION

The present invention relates to a vehicle lamp device, and more particularly to an optical conversion device.

### BACKGROUND OF THE INVENTION

Automotive lamp must provide the best lighting for a moving car. However, in the actual road traffic environment, when two moving cars meet in opposite directions, the strong light of the headlights may cause the driver to be dazzled and there is a danger of a traffic accident. At present, the main solution is to perform light conversion of low beam and high beam of automobile headlights.

The device for performing light conversion of automobile headlights generally includes a light blocking member for light blocking switching. However, most of the light blocking member generally uses metallic materials, which are not conducive to the formation of complex shapes and are costly. Examples of devices known in the art are disclosed in EP1746340A2 and FR3025859A1, as well as EP2620325A1.

### SUMMARY OF THE INVENTION

One object of the present invention is to make the light blocking member of the optical conversion device easy to mold.

Accordingly, in one aspect thereof, the present invention provides an optical conversion device as described in claim 1 below.

Preferably, the thermal barrier coating has a thickness between 16 micron and 60 micron.

Preferably, the first metal coating is a copper layer, and the second metal coating is a nickel layer or a chromium layer.

Preferably, the thermal barrier coating further includes a third metal coating disposed on the second metal coating.

Preferably, the first metal coating is a copper layer, the second metal coating is a nickel layer, and the third metal coating is a chromium layer.

Preferably, the copper layer has a thickness of 20 micron to 40 micron, the nickel layer has a thickness of 10 micron to 20 micron, and the chromium layer has a thickness of 2 micron to 4 micron.

Preferably, the copper layer has a thickness of 20 micron to 25 micron.

Preferably, the nickel layer has a thickness of 12 micron to 18 micron.

Preferably, the chrome layer has a thickness of 2 micron to 3 micron.

Preferably, the housing includes a main body portion and two arm portions respectively extending from both ends of the main body portion, the two arm portions and the main body portion form a U shape; the optical conversion device further including: a rotating mechanism coupled between the two arm portions, the rotating mechanism being rotatable relative to the two arm portions; the light blocking member being mounted to the rotating mechanism and rotatable relative to the two arm portions along with the rotating mechanism; and a driving mechanism mounted to the main body portion, the driving mechanism for driving the rotating mechanism to rotate relative to the two arm portions. Each of the arm portions including a first mounting plate and a second mounting plate, and the first mounting plate and the second mounting plate are connected and form a bent portion, the second mounting plate is coupled to the rotating mechanism, and the first mounting plate is for mounting the housing to a reflector of a vehicle lamp. The main body portion and the two arm portions are a one-piece whole body.

Preferably, the housing is an annular shape having a through hole, and includes a main body portion and a connecting portion, and two ends of the connecting portion are respectively connected to both ends of the main body portion to form the through hole between the main body portion and the connecting portion; the two ends of the connecting portion respectively have a mounting plate, and the mounting plate extends along the direction of the through hole; the optical conversion device further including: a rotating mechanism coupled between the two mounting plates, the rotating mechanism being rotatable relative to the two mounting plates; the light blocking member being mounted to the rotating mechanism and rotatable relative to the two mounting plates along with the rotating mechanism; and a driving mechanism mounted to the main body portion for driving the rotating mechanism to rotate relative to the two mounting plates.

Preferably, the main body portion and the connecting portion are a one-piece whole body.

In view of foregoing, the light blocking member is made of plastic, which is advantageous for molding of a complicated shape, and at the same time, a thermal barrier coating on the surface of the light blocking member can withstand high temperature, and can obtain a high reflectance and improve the effect of light conversion.

### BRIEF DESCRIPTION OF THE DRAWINGS

Figure 1 is a schematic view showing the structure of a front of an optical conversion device according to an embodiment of the present invention;
Figure 2 is a schematic view showing the structure of a back of the optical conversion device shown in Figure 1;
Figure 3 is a schematic exploded view of the optical conversion device shown in Figure 1;
Figure 4 is a schematic view of the limiting portion of the housing of the optical conversion device shown in Figure 1;
Figure 5 is a schematic view of the housing of the optical conversion device shown in Figure 1;
Figure 6 is a schematic view showing the structure of a back of the rotating mechanism of the optical conversion device shown in Figure 1;
Figure 7 is a partial enlarged view of the groove of the housing shown in Figure 3;
Figure 8 is a partial enlarged view of the bump of the housing shown in Figure 3;
Figure 9 is a schematic view showing the structure of a light blocking member of the optical conversion device shown in Figure 1;
Figure 10 is a schematic cross-sectional view showing the thickness of the light blocking member shown in Figure 9;
FIG. 11 is a schematic view showing the structure of a front of an optical conversion device according to another embodiment of the present invention;
Figure 12 is a schematic exploded view of the optical conversion device shown in Figure 11; and
Figure 13 is a schematic view showing the structure of a housing of the optical conversion device shown in Fig. 11.

### DETAILED DESCRIPTION OF THE PREFERRED EMBODIMENTS

Below, embodiments of the present invention will be described in greater detail with reference to the drawings.

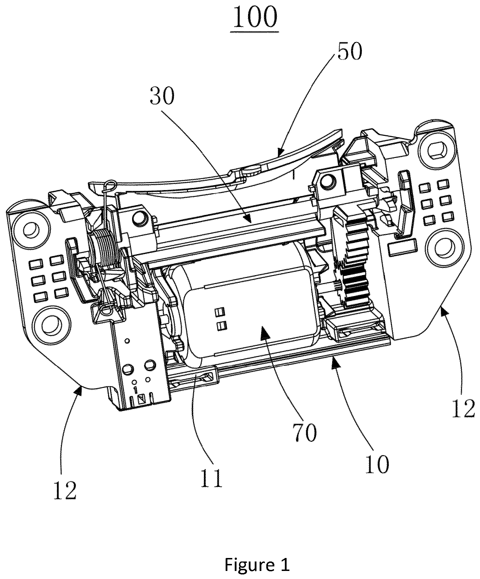

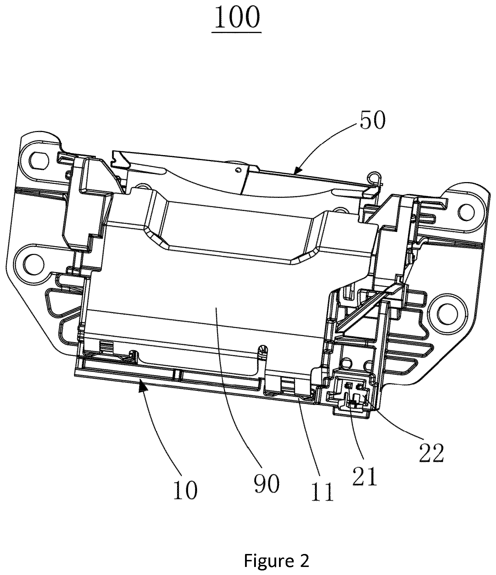

Referring to Fig. 1 and Fig. 2, an optical conversion device 100 according to an embodiment of the present invention is disposed between a reflector and a lens of an automobile headlight, and it is mainly applied to the light conversion of the low beam and the high beam of the automobile headlight. In the present embodiment, the automobile headlight is, for example, a LED headlight, a xenon headlight, a halogen lamp, or the like.

The optical conversion device 100 includes a housing 10 mounted to an open end of the reflector of the headlight, a rotating mechanism 30, a light blocking member 50, and a driving mechanism 70 mounted to the housing 10. The housing 10 includes a main body portion 11 and two arm portions 12 extending from both ends of the main body portion 11, respectively, and the two arm portions 12 form a U shape with the main body portion 11. Two arm portions 12 are used to mount the housing 10 to the reflector. The rotating mechanism 30 is coupled to the two arm portions 12 and is rotatable relative to the two arm portions 12. The light blocking member 50 is attached to the rotating mechanism 30, and it can be switched in accordance with the rotating mechanism 30 with respect to the two arm portions 12 in front of the automobile headlight, thereby achieving light conversion of low beam and high beam. The driving mechanism 70 is mounted to the main body portion 11 and is located below the rotating mechanism 30. The driving mechanism 70 is used to drive the rotating mechanism 30 to rotate relative to the two arm portions 12.

The side of the main body portion 11 near the open end of the reflector has a first cavity 15 and a second cavity 16, and the first cavity 15 accommodates the driving mechanism 70, and the second cavity 16 is located on one side of the first cavity 15. The side of the main body portion 11 near the lens has a baffle 90. The shape of the baffle 90 matches the shape of the outer surface of the side of the main body portion 11 close to the lens. The baffle 90 is used to shield sunlight from being focused on the product through the lens, extending the life of the product.

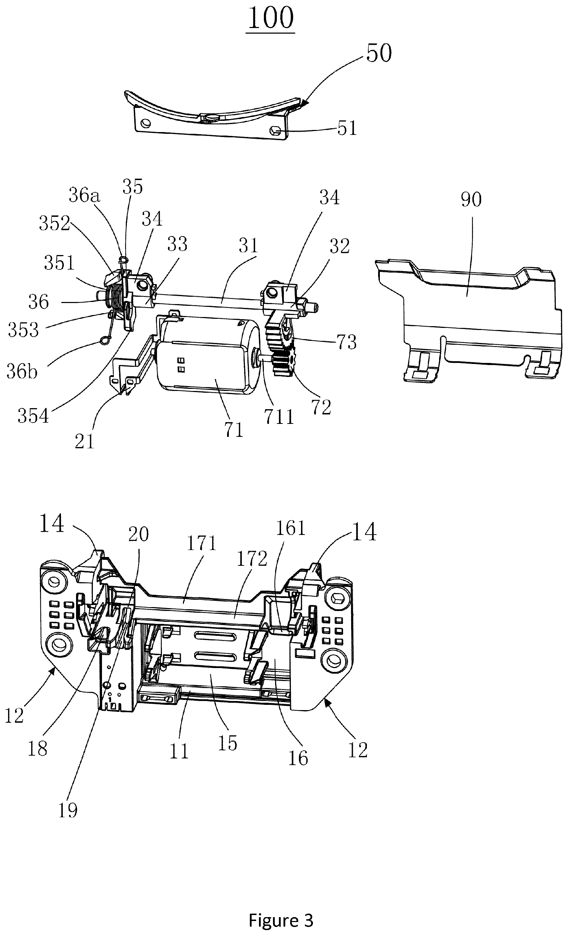

Referring to Fig. 3 through Fig. 8, the arm portion 12 includes a first mounting plate 13 and a second mounting plate 14. The first mounting plate 13 and the second mounting plate 14 are connected and form a bent portion. The first mounting plate 13 is used to mount the housing 10 to the reflector. Specifically, the first mounting plate 13 has a mounting hole 131. The first mounting plate 13 is mounted to the reflector through the mounting hole 131 and a fastener. Preferably, there are two mounting holes 131 arranged in an up-and-down alignment. The second mounting plate 14 is coupled to the rotating mechanism 30. In the embodiment of the present disclosure, the main body portion 11 and the two arm portions 12 are injection-molded into a one-piece whole body from materials of PPA-GF 35% (PPA: polyphosphoric acid, GF35: glass fiber content 35%). Materials of PPA-GF35% have the advantages of low cost, high strength, good heat resistance and easy manufacturing.

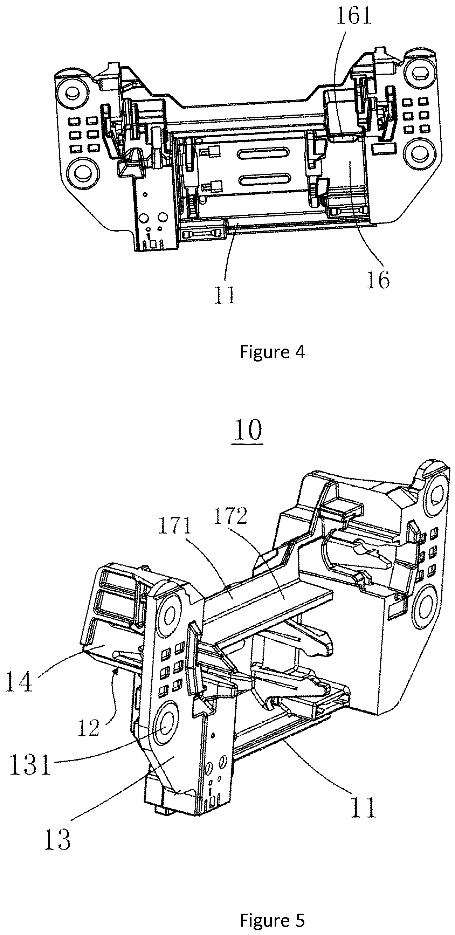

The housing 10 further has a reinforcing structure that is between the two arm portions 12, or the housing 10 further has a reinforcing structure that is connected to the main body portion 11. In this embodiment, the reinforcing structure includes a first reinforcing plate 171 and a second reinforcing plate 172, and the plane of the first reinforcing plate 171 is approximately parallel to the extending direction of the two arm portions 12, and the second reinforcing plate 172 intersects with or extends from the first reinforcing plate 171 to form a step at the intersection with the first reinforcing plate 171. Preferably, the second reinforcing plate 172 is perpendicular to the first reinforcing plate 171, but the second reinforcing plate 172 may also form an angle not equal to 90 degrees with the first reinforcing plate 171. Preferably, the reinforcing structure is located at the top of the main body portion 11, and the second reinforcing plate 172 serves as a wall of the first cavity 15 and is connected to the bottom of the first cavity 15 (see Figs. 3 and 5). The first reinforcing plate 171 and the second reinforcing plate 172 are provided to enhance the structural strength of the product.

The driving mechanism 70 includes a motor 71 and a gear mechanism. The motor 71 is mounted into the first cavity 15. The gear mechanism is located within the second cavity 16. An output shaft 711 of the motor 71 extends into the second cavity 16 to be coupled to the gear mechanism to drive the rotating mechanism 30 through the gear mechanism. Specifically, the gear mechanism includes a pinion gear 72 and a sector gear 73 that meshes with the pinion gear 72. The pinion gear 72 is fixedly mounted to the output shaft 711 of the motor 71. The rotation of pinion gear 72 can drive the sector gear 73 to rotate in front of automobile headlight. In the present embodiment, the central angle of the sector gear 73 is 45 degree to 60 degree. The wall of the second cavity 16 has a convex limiting portion 161 (see Figs. 3 and 4) corresponding to the bottom of the sector gear 73. When the sector gear 73 is rotated to the position of the limiting portion 161, the limiting portion 161defines the rotational position of the sector gear 73, thereby defining the rotational position of the rotating mechanism 30.

The arm portion 12 of the main body portion 11 far away from the second cavity 16 is mounted with lead terminals 21. One end of the lead terminals 21 is connected to the motor 71, and the other end is located in a socket 22 on the side of the main body portion 11 close to the open end of the reflector for connection with an external power source (as shown in Fig. 2), thereby supplying power to the motor 71. Preferably, the lead terminals 21 are two, and are connected to the positive and negative electrodes of the motor 71, respectively.

The rotating mechanism 30 includes a connecting shaft 31 and a connecting member that is fixedly fitted to the connecting shaft 31. The connecting shaft 31 is coupled to the second mounting plate 14 of the two arm portions 12 and is rotatable relative to the two arm portions 12. Preferably, the connecting member is fixedly sleeved to the connecting shaft 31 by injection molding, and it is easy to manufacture. The connecting shaft 31 is located above the second reinforcing plate 172 and does not protrude from the first reinforcing plate 171.

The connecting member includes a first connecting member 32 and a second connecting member 33. The first connecting member 32 and the second connecting member 33 are respectively fixedly sleeved to both ends of the connecting shaft 31. The light blocking member 50 is mounted to the first connecting member 32 and the second connecting member 33, and the light blocking member 50 is parallel to the connecting shaft 31. Specifically, the top of the first connecting member 32 and the top of the second connecting member 33 are respectively formed with a fixing portion 34. The fixing portion 34 is formed with a connecting structure 341 facing the open end of the reflector. The light blocking member 50 has a hole 51 corresponding to the connecting structure 341. The hole 51 is mounted in the connecting structure 341 and is riveted to form an integral structure, thereby mounting the light blocking member 50 to the first connecting member 32 and the second connecting member 33. The process ensures that the integral structure maintains stability during vehicle vibration.

The top of the first connecting member 32 and the top of the second connecting member 33 respectively have a notch 321, a notch 331. Two ends of the bottom of the light blocking member 50 are respectively placed on the bottoms of the two notches 321, 331 to support the light blocking member 50. The structure is compact and the height of the optical conversion device can be reduced.

The sector gear 73 is formed at the bottom of the first connecting member 32 and is integrally formed with the first connecting member 32. When the high beam function of the automobile headlight is to be realized, the output shaft of the motor 71 drives the pinion gear 72 to rotate, and the pinion gear 72 drives the sector gear 73 to rotate backward, and the backward rotation of the sector gear 73 can drive the first connecting member 32, the second connecting member 33, and the connecting shaft 31 to rotate forward, and the light blocking member 50 is rotated forward along with the first connecting member 32 and the second connecting member 33 to realize the light blocking switching, so that the headlight realizes the high beam function.

The second connecting member 33 is mounted with a reset torsion spring 36, and one end 36a of the reset torsion spring 36 is attached to the second connecting member 33, and the other end 36b is attached to the main body portion 11. Specifically, an end of the second connecting member 33 remote from the first connecting member 32 is formed with a mounting portion 35. The mounting portion 35 is formed with a sleeve portion 351 that is fixedly fitted to the connecting shaft 31, and two clip arms 352, 353 that are located on the upper side and lower side of the sleeve portion 351. As shown in Fig. 1, the sleeve portion 351 is fixedly sleeved with a reset torsion spring 36, and both ends 36a, 36b of the reset torsion spring 36 are respectively clamped by the two clamp arms 352, 353. The end of the one end 36b of the reset torsion spring 36 sandwiched by the clamp arm 353 located on the lower side of the sleeve portion 351 abuts against the recess 18 of the corresponding main body portion 11. The reset torsion spring 36 can maintain a relatively stable torque value during the rotation of the light blocking member 50, and avoid the jam in the light conversion process. The two clamp arms 352, 353 can respectively be respectively set to the return torsion spring 36. The ends 36a, 36b exert a force to cause the reset torsion spring 36 to generate torque. The two clamp arms 352, 353 are provided to apply a force to the opposite ends 36a, 36b of the reset torsion spring 36, respectively, so that the reset torsion spring 36 generates torque. In addition, during the forward and backward rotation of the light blocking member 50, the point of application of the reset torsion spring 36 is on the end 36b of the reset torsion spring 36 that is clamped by the clamp arm 353 located on the lower side of the sleeve portion 351, and the point of application of the reset torsion spring 36 will slide back and forth in the recess 18 of the main body portion 11, thereby ensuring a relatively constant torque value of the return torsion spring 36. When the automobile headlight is realized by the high beam function to the low beam function, the motor 71 is powered off, and the pinion gear 72 stops driving the sector gear 73 to rotate. At this time, the light blocking member 50 can automatically return to the initial position under the elastic force of the reset torsion spring 36, thereby realizing the low beam function of the automobile headlight.

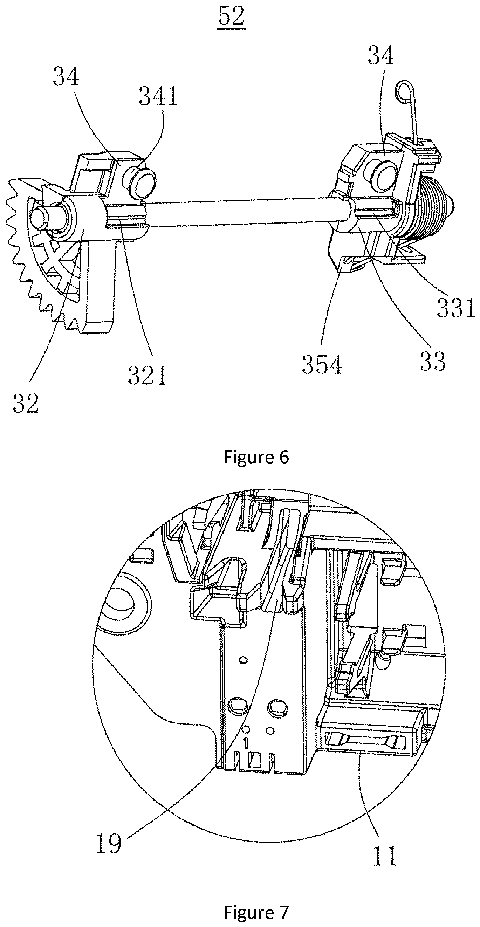

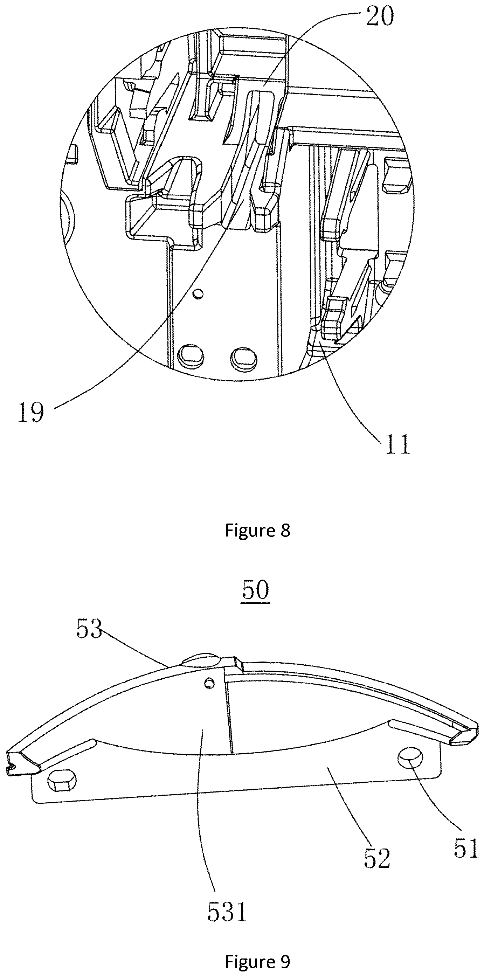

At one end of the bottom of the mounting portion 35 away from the reflector is formed with a hook-like structure 354, and the hook-like structure 354 is received in the corresponding groove 19 (see Figs. 3 and 7) of the main body portion 11. A bump 20 having a "∩" shape is provided on the groove 19 at a position close to the reflector (see Figs. 3 and 8). When the sector gear 73 is rotated to a position of the limiting portion 161, the hook structure 354 can be snapped to the bump 20, and the bump 20 acts as a limit on the rotation of the second connecting member 33. The bump 20 and the limiting portion 161 together define the rotational position of the rotating mechanism 30, so that the light conversion is relatively stable.

Referring to Figs. 3 and 9, the light blocking member 50 includes a main body 52 mounted to the first connecting member 32 and the second connecting member 33, and an arc-shaped light blocking structure 53 formed on the top of the main body 52 for effecting light blocking switching. The main body 52 has a hole 51 that is riveted to the connecting structure 341 of the first connecting member 32 and the second connecting member 33. The arc-shaped light blocking structure 53 has a concave reflecting portion 531. During the forward and backward rotation of the light blocking member 50, the light source of the automobile headlight is blocked or reflected by the concave reflecting portion 531, thereby realizing the light conversion of the lower beam and high beam of the automobile headlight.

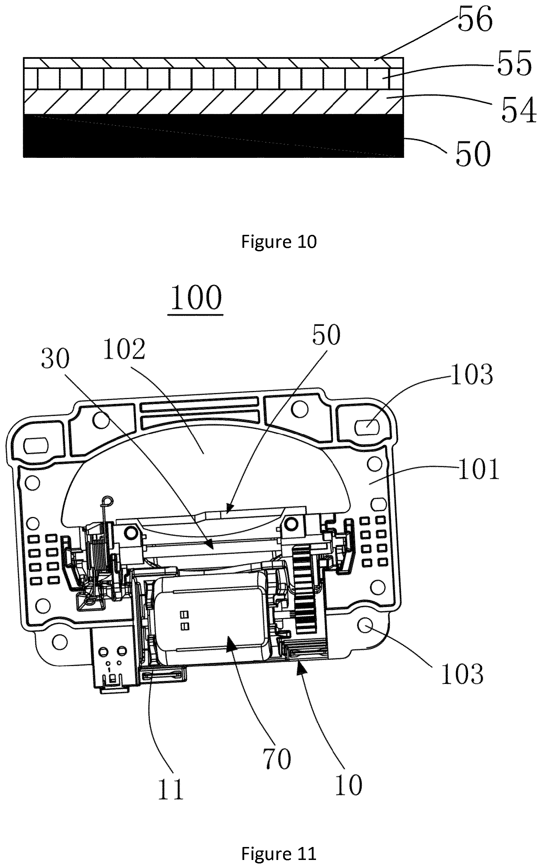

Referring to Fig. 10, the light blocking member 50 is a one-piece unit made of plastic, so that a complicated shape can be formed. The surface of the light blocking member 50 is provided with a thermal barrier coating. The thermal barrier coating is resistant to high temperatures and achieves high reflectivity. The thickness of the thermal barrier coating is between 16 micrometer to 60 micrometer, which ensures that the focus point of the light blocking member 50 is not burned by the sunlight, and the light conversion can be ensured.

The thermal barrier coating includes a first metal coating 54, a second metal coating 55, and a third metal coating 56 disposed in sequence on the surface of the light blocking member 50. The first metal coating 54 is easy to combine with the light blocking members 50, and the filling performance is good. The second metal coating 55 has good corrosion resistance. The third metal coating 56 maintains the surface of the light blocking member 50 to a brightening effect. The first metal coating 54, the second metal coating 55, and the third metal coating 56 are sequentially disposed on the surface of the light blocking member 50 by a plating process. Specifically, in the present embodiment, the first metal coating 54 is a copper layer, the second metal coating 55 is a nickel layer, and the third metal coating 56 is a chromium layer. The copper layer is easily combined with the light blocking member 50, and the filling performance is good, so that the surface of the light blocking member 50 can be bright and flat. The nickel layer has good corrosion resistance and maintains stable performance in different temperature and salt spray environments without damaging the copper layer. The chrome layer makes the surface structure of the light blocking member 50 stronger and keeps its surface bright. In an alternative, the copper layer has a thickness of 20 micron to 40 micron, the nickel layer has a thickness of 10 micron to 20 micron, and the chromium layer has a thickness of 2 micron to 4 micron. In another alternative, the copper layer has a thickness of 20 micron to 25 micron. The nickel layer has a thickness of 12 micron to 18 micron. The chrome layer has a thickness of 2 micron to 3 micron. It can be understood that the thicknesses of the copper layer, the nickel layer and the chrome layer can be set according to actual conditions, as long as the total thickness of the three is in the range of 16 micron to 60 micron.

In other embodiments, the thermal barrier coating may also include a first metal coating disposed on the surface of the light blocking member 50, and a second metal coating disposed on the first metal coating. In an alternative, the first metal coating is a copper layer, and the second metal coating is a nickel layer or a chromium layer.

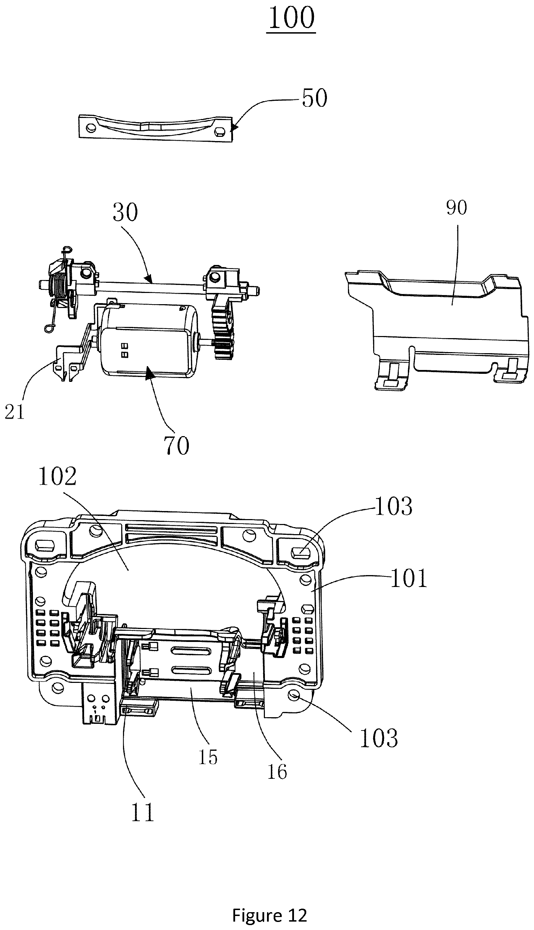

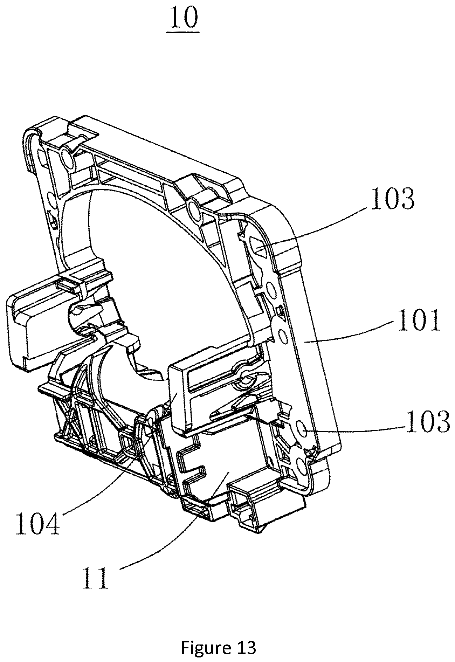

Referring to Fig. 11 to Fig. 13, an optical conversion device 100 according to another embodiment of the present invention is provided. This embodiment is different from the above embodiment in that the housing 10 includes a main body portion 11 and a connecting portion 101, and two ends of the connecting portion 101 are respectively connected to both ends of the main body portion 11 to form an annular shape with the main body portion 11. The housing 10 is for mounting the optical conversion device 100 to a reflector of automobile headlight. The interior of the housing 10 has a through hole 102 that is approximately semi-circular for light to pass through.

The light blocking member 50 is located in the through hole 102 to achieve light blocking switching. When the light blocking member 50 rotates relative to the housing 10, the shape and area of the through hole 102 are changed, thereby affecting the amount of light directly passing through the through hole 102, and a part of the light is reflected by the concave reflecting portion 531 of the light blocking member 50, and has a new propagation direction. In this embodiment, the connecting portion 101 is for mounting the housing 10 to the reflector. Specifically, both sides of the connecting portion 101 have mounting holes 103, respectively, and the connecting portion 101 is mounted to the reflector through the mounting holes 103 and the fasteners. Preferably, the number of mounting holes 103 is six, and the six mounting holes 103 are spaced apart, and the mounting holes 103 include circular mounting holes and square mounting holes so as to be securely mounted to the reflector.

The housing 10 further has a pair of mounting plates 104 that are respectively located at opposite ends of the connecting portion 101 and extend in the direction of the through hole 102 for mounting the rotating mechanism 30. Alternatively, the pair of mounting plates 104 may be located at both ends of the main body portion 11, respectively.

The main body portion 11, the two mounting plates 104 and the connecting portion 101 are injection-molded into a one-piece whole body from materials of a PPA-GF 35% (PPA: polyphosphoric acid, GF35: glass fiber content 35%).

The above embodiments are only illustrative of the preferred embodiments of the present invention, and the description thereof is more specific and detailed, but is not to be construed as limiting the scope of the invention. It should be noted that a number of variations and modifications may be made by those skilled in the art without departing from the scope of the invention as defined by the appended claims.

## Claims

1. An optical conversion device (100) for being disposed between a reflector and a lens of an automobile headlight, comprising:
a housing (10) comprising a main body portion (11) and the side of the main body portion (11) designed to be placed near an open end of an headlight reflector comprising a first cavity (15) and a second cavity (16) located on one side of the first cavity (15);
a rotating mechanism (30) coupled to the housing (10), the rotating mechanism (30) being rotatable relative to housing (10), wherein the rotating mechanism (30) comprises a connecting shaft (31) and a connecting member that is fixedly fitted to the connecting shaft (31), and the connecting shaft (31) is coupled to the housing (10) and is rotatable relative to the housing (10), and wherein the connecting member comprises a first connecting member (32) and a second connecting member (33), and wherein the first connecting member (32) and the second connecting member (33) are respectively fixedly sleeved to both ends of the connecting shaft (31), the top of the first connecting member (32) and the top of the second connecting member (33) being respectively formed with a fixing portion (34), and the fixing portion (34) being formed with a connecting structure (341);
a driving mechanism (70) mounted to the main body portion (11) for driving the rotating mechanism (30) to rotate relative to the housing (10), the driving mechanism (70) comprising a motor (71) and a gear mechanism, the motor (71) being mounted into the first cavity (15), and the gear mechanism being located within the second cavity (16);
a light blocking member (50) which is mounted to the first connecting member (32) and the second connecting member (33) of the rotating mechanism (30), and rotatable relative to the housing (10) along with the rotating mechanism (30), the light blocking member (50) comprising a main body (52) mounted to the first connecting member (32) and the second connecting member (33), and an arc-shaped light blocking structure (53) formed on the top of the main body (52) for effecting light blocking switching; the main body (52) has two holes (51) which are respectively riveted to the connecting structure (341) of the first connecting member (32) and the second connecting member (33), and the arc-shaped light blocking structure (53) has a concave reflecting portion (531);
wherein the light blocking member (50), including its main body (52) having holes (51) and its arc-shaped light blocking structure (53) having a concave reflecting portion (531), is a one-piece unit made of plastic, and a surface of the light blocking member (50) is provided with a thermal barrier coating; and wherein the thermal barrier coating comprises a first metal coating (54) disposed on a surface of the light blocking member (50), and a second metal coating (55) disposed on the first metal coating (54).

2. The optical conversion device (100) according to claim 1, wherein the thermal barrier coating has a thickness between 16 micron and 60 micron.

3. The optical conversion device (100) according to claim 1, wherein the first metal coating (54) is a copper layer, and the second metal coating (55) is a nickel layer or a chromium layer.

4. The optical conversion device (100) according to claim 1, wherein the thermal barrier coating further comprises a third metal coating (56) disposed on the second metal coating (55).

5. The optical conversion device (100) according to claim 4, wherein the first metal coating (54) is a copper layer, the second metal coating (55) is a nickel layer, and the third metal coating (56) is a chromium layer.

6. The optical conversion device (100) according to claim 5, wherein the copper layer has a thickness of 20 micron to 40 micron, the nickel layer has a thickness of 10 micron to 20 micron, and the chromium layer has a thickness of 2 micron to 4 micron.

7. The optical conversion device (100) according to claim 5, wherein the copper layer has a thickness of 20 micron to 25 micron.

8. The optical conversion device (100) according to claim 5, wherein the nickel layer has a thickness of 12 micron to 18 micron.

9. The optical conversion device (100) according to claim 5, wherein the chrome layer has a thickness of 2 micron to 3 micron.

10. The optical conversion device (100) according to claim 1, wherein the housing (10) comprises a main body portion (11) and two arm portions (12) respectively extending from both ends of the main body portion (11), the two arm portions (12) and the main body portion (11) form a U shape; the optical conversion device (100) further comprising:
a rotating mechanism (30) coupled between the two arm portions (12), the rotating mechanism (30) being rotatable relative to the two arm portions (12); the light blocking member (50) being mounted to the rotating mechanism (30) and rotatable relative to the two arm portions (12) along with the rotating mechanism (30); and
a driving mechanism (70) mounted to the main body portion (11), the driving mechanism (70) for driving the rotating mechanism (30) to rotate relative to the two arm portions (12).

11. The optical conversion device (100) according to claim 10, wherein each of the two arm portions (12) comprising a first mounting plate (13) and a second mounting plate (14), and the first mounting plate (13) and the second mounting plate (14) are connected and form a bent portion, the second mounting plate (14) is coupled to the rotating mechanism (30), and the first mounting plate (13) is for mounting the housing (10) to a reflector of a vehicle lamp.

12. The optical conversion device (100) according to claim 10, wherein the main body portion (11) and the two arm portions (12) are a one-piece whole body.

13. The optical conversion device (100) according to claim 1, wherein:
the housing (10) is an annular shape having a through hole (102), and comprises a main body portion (11) and a connecting portion (101), and two ends of the connecting portion (101) are respectively connected to both ends of the main body portion (11) to form the through hole (102) between the main body portion (11) and the connecting portion (101);
the two ends of the connecting portion (101) respectively have a mounting plate (104), and the mounting plate (104) extends along the direction of the through hole (102);
the optical conversion device (100) further comprising a rotating mechanism (30) coupled between the two mounting plates (104), the rotating mechanism (30) being rotatable relative to the two mounting plates (104); the light blocking member (50) being mounted to the rotating mechanism (30) and rotatable relative to the two mounting plates (104) along with the rotating mechanism (30); and
a driving mechanism (70) mounted to the main body portion (11) for driving the rotating mechanism (30) to rotate relative to the two mounting plates (104).

14. The optical conversion device (100) according to claim 13, wherein the main body portion (11) and the connecting portion (101) are a one-piece whole body.

## Patentansprüche

1. Optische Umwandlungsvorrichtung (100) zum Anordnen zwischen einem Reflektor und einem Glas eines Autoscheinwerfers, umfassend:
ein Gehäuse (10), umfassend einen Hauptgehäuseabschnitt (11) und die Seite des Hauptkörperabschnitts (11), die dazu entworfen ist, nahe einem offenen Ende eines Scheinwerferreflektors platziert zu werden, umfassend eine erste Aussparung (15) und eine zweite Aussparung (16), die sich auf einer Seite der ersten Aussparung (15) befindet;
einen Drehmechanismus (30), der an das Gehäuse (10) gekoppelt ist, wobei der Drehmechanismus (30) in Bezug auf das Gehäuse (10) drehbar ist, wobei der Drehmechanismus (30) eine Verbindungswelle (31) und ein Verbindungselement umfasst, das fest an der Verbindungswelle (31) angebracht ist, und die Verbindungswelle (31) an das Gehäuse (10) gekoppelt ist und in Bezug auf das Gehäuse (10) drehbar ist, und wobei das Verbindungselement ein erstes Verbindungselement (32) und ein zweites Verbindungselement (33) umfasst, und wobei das erste Verbindungselement (32) und das zweite Verbindungselement (33) jeweils fest an beiden Enden der Verbindungswelle (31) aufgesteckt sind, der obere Teil des ersten Verbindungselements (32) und der obere Teil des zweiten Verbindungselements (33) jeweils mit einem Befestigungsabschnitt (34) ausgebildet sind und der Befestigungsabschnitt (34) mit einer Verbindungsstruktur (341) ausgebildet ist;
einen Antriebsmechanismus (70), der an dem Hauptkörperabschnitt (11) montiert ist, zum Antreiben des Drehmechanismus (30), um diesen in Bezug auf das Gehäuse (10) zu drehen, wobei der Antriebsmechanismus (70) einen Motor (71) und einen Getriebemechanismus umfasst, wobei der Motor (71) in die erste Aussparung (15) montiert ist und der Getriebemechanismus sich innerhalb der zweiten Aussparung (16) befindet;
ein Lichtblockierelement (50), das an dem ersten Verbindungselement (32) und dem zweiten Verbindungselement (33) des Drehmechanismus (30) montiert ist und in Bezug auf das Gehäuse (10) zusammen mit dem Drehmechanismus (30) drehbar ist, wobei das Lichtblockierelement (50) einen Hauptkörper (52), der an dem ersten Verbindungselement (32) und dem zweiten Verbindungselement (33) montiert ist, und eine bogenförmige Lichtblockierstruktur (53), die an dem oberen Teil des Hauptkörpers (52) ausgebildet ist, zum Bewirken eines Umschaltens einer Lichtblockierung umfasst; wobei der Hauptkörper (52) zwei Löcher (51) aufweist, die jeweils an die Verbindungsstruktur (341) des ersten Verbindungselements (32) und des zweiten Verbindungselements (33) genietet sind, und die bogenförmige Lichtblockierstruktur (53) einen konkaven Reflexionsabschnitt (531) aufweist;
wobei das Lichtblockierelement (50), einschließlich seines Hauptkörpers (52), der Löcher (51) aufweist, und seiner bogenförmigen Lichtblockierstruktur 53), die einen konkaven Reflexionsabschnitt (531) aufweist, eine einteilige Einheit ist, die aus Kunststoff hergestellt ist, und eine Fläche des Lichtblockierelements (50) mit einer Wärmedämmbeschichtung versehen ist; und wobei die Wärmedämmbeschichtung eine erste Metallbeschichtung (54), die auf einer Fläche des Lichtblockierelements (50) angeordnet ist, und eine zweite Metallbeschichtung (55), die auf der ersten Metallbeschichtung (54) angeordnet ist, umfasst.

2. Optische Umwandlungsvorrichtung (100) nach Anspruch 1, wobei die Wärmedämmbeschichtung eine Dicke zwischen 16 Mikron und 60 Mikron aufweist.

3. Optische Umwandlungsvorrichtung (100) nach Anspruch 1, wobei die erste Metallbeschichtung (54) eine Kupferschicht ist und die zweite Metallbeschichtung (55) eine Nickelschicht oder eine Chromschicht ist.

4. Optische Umwandlungsvorrichtung (100) nach Anspruch 1, wobei die Wärmedämmbeschichtung weiterhin eine dritte Metallbeschichtung (56) umfasst, die auf der zweiten Metallbeschichtung (55) angeordnet ist.

5. Optische Umwandlungsvorrichtung (100) nach Anspruch 4, wobei die erste Metallbeschichtung (54) eine Kupferschicht ist, die zweite Metallbeschichtung (55) eine Nickelschicht ist und die dritte Metallbeschichtung (56) eine Chromschicht ist.

6. Optische Umwandlungsvorrichtung (100) nach Anspruch 5, wobei die Kupferschicht eine Dicke von 20 Mikron bis 40 Mikron aufweist, die Nickelschicht eine Dicke von 10 Mikron bis 20 Mikron aufweist und die Chromschicht eine Dicke von 2 Mikron bis 4 Mikron aufweist.

7. Optische Umwandlungsvorrichtung (100) nach Anspruch 5, wobei die Kupferschicht eine Dicke von 20 Mikron bis 25 Mikron aufweist.

8. Optische Umwandlungsvorrichtung (100) nach Anspruch 5, wobei die Nickelschicht eine Dicke von 12 Mikron bis 18 Mikron aufweist.

9. Optische Umwandlungsvorrichtung (100) nach Anspruch 5, wobei die Chromschicht eine Dicke von 2 Mikron bis 3 Mikron aufweist.

10. Optische Umwandlungsvorrichtung (100) nach Anspruch 1, wobei das Gehäuse (10) einen Hauptkörperabschnitt (11) und zwei Armabschnitte (12) umfasst, die sich jeweils von beiden Enden des Hauptkörperabschnitts (11) erstrecken, wobei die zwei Armabschnitte (12) und der Hauptkörperabschnitt (11) eine U-Form bilden; wobei die optische Umwandlungsvorrichtung (100) weiterhin umfasst:
einen Drehmechanismus (30), der zwischen den zwei Armabschnitten (12) gekoppelt ist, wobei der Drehmechanismus (30) in Bezug auf die zwei Armabschnitte (12) drehbar ist; wobei das Lichtblockierelement (50) an dem Drehmechanismus (30) montiert ist und in Bezug auf die zwei Armabschnitte (12) zusammen mit dem Drehmechanismus (30) drehbar ist; und
einen Antriebsmechanismus (70), der an dem Hauptkörperabschnitt (11) montiert ist, wobei der Antriebsmechanismus (70) zum Antreiben des Drehmechanismus (30) ist, um sich in Bezug auf die zwei Armabschnitte (12) zu drehen.

11. Optische Umwandlungsvorrichtung (100) nach Anspruch 10, wobei jeder der zwei Armabschnitte (12) eine erste Montageplatte (13) und eine zweite Montageplatte (14) umfasst und die erste Montageplatte (13) und die zweite Montageplatte (14) verbunden sind und einen gebogenen Abschnitt bilden, wobei die zweite Montageplatte (14) an den Drehmechanismus (30) gekoppelt ist und die erste Montageplatte (13) zum Montieren des Gehäuses (10) an einem Reflektor einer Fahrzeuglampe ist.

12. Optische Umwandlungsvorrichtung (100) nach Anspruch 10, wobei der Hauptkörperabschnitt (11) und die zwei Armabschnitte (12) ein einteiliger Vollkörper sind.

13. Optische Umwandlungsvorrichtung (100) nach Anspruch 1, wobei:
das Gehäuse (10) eine Ringform mit einer Durchgangsbohrung (102) hat und einen Hauptkörperabschnitt (11) und einen Verbindungsabschnitt (101) umfasst, und zwei Enden des Verbindungsabschnitts (101) jeweils mit beiden Enden des Hauptkörperabschnitts (11) verbunden sind, um die Durchgangsbohrung (102) zwischen dem Hauptkörperabschnitt (11) und dem Verbindungsabschnitt (101) zu bilden;
die zwei Enden des Verbindungsabschnitts (101) jeweils eine Montageplatte (104) aufweisen und die Montageplatte (104) sich entlang der Richtung der Durchgangsbohrung (102) erstreckt;
die optische Umwandlungsvorrichtung (100) weiterhin einen Drehmechanismus (30), der zwischen den zwei Montageplatten (104) gekoppelt ist, wobei der Drehmechanismus (30) in Bezug auf die zwei Montageplatten (104) drehbar ist; wobei das Lichtblockierelement (50) an dem Drehmechanismus (30) montiert ist und in Bezug auf die zwei Montageplatten (104) zusammen mit dem Drehmechanismus (30) drehbar ist; und
einen Antriebsmechanismus (70), der an dem Hauptkörperabschnitt (11) montiert ist, zum Antreiben des Drehmechanismus (30), um sich in Bezug auf die zwei Montageplatten (104) zu drehen, umfasst.

14. Optische Umwandlungsvorrichtung (100) nach Anspruch 13, wobei der Hauptkörperabschnitt (11) und der Verbindungsabschnitt (101) ein einteiliger Vollkörper sind.

## Revendications

1. Un dispositif de conversion optique (100) destiné à être disposé entre un réflecteur et une lentille d'un phare d'automobile, comprenant :
un boîtier (10) comprenant une partie de corps principal (11) et le côté de la partie de corps principal (11) conçu pour être placé près d'une extrémité ouverte d'un réflecteur de phare comprenant une première cavité (15) et une seconde cavité (16) située sur un côté de la première cavité (15) ;
un mécanisme rotatif (30) couplé au boîtier (10), le mécanisme rotatif (30) étant rotatif par rapport au boîtier (10), le mécanisme rotatif (30) comprenant un arbre de liaison (31) et un élément de liaison qui est monté de manière fixe sur l'arbre de liaison (31), et l'arbre de liaison (31) est couplé au boîtier (10) et est rotatif par rapport au boîtier (10), et l'élément de liaison comprenant un premier élément de liaison (32) et un second élément de liaison (33), et le premier élément de liaison (32) et le second élément de liaison (33) étant respectivement emmanchés de manière fixe sur les deux extrémités de l'arbre de liaison (31), le sommet du premier élément de liaison (32) et le sommet du second élément de liaison (33) étant respectivement formé avec une partie de fixation (34), et la partie de fixation (34) étant formée avec une structure de liaison (341) ;
un mécanisme d'entraînement (70) monté sur la partie de corps principal (11) pour entraîner le mécanisme rotatif (30) en rotation par rapport au boîtier (10), le mécanisme d'entraînement (70) comprenant un moteur (71) et un mécanisme d'engrenage, le moteur (71) étant monté dans la première cavité (15), et le mécanisme d'engrenage étant situé dans la seconde cavité (16) ;
un élément de blocage de lumière (50) qui est monté sur le premier élément de connexion (32) et le second élément de connexion (33) du mécanisme rotatif (30), et pouvant tourner par rapport au boîtier (10) avec le mécanisme rotatif (30), l'élément de blocage de lumière (50) comprenant un corps principal (52) monté sur le premier élément de connexion (32) et le second élément de connexion (33), et une structure de blocage de lumière en forme d'arc (53) formée sur le dessus du corps principal (52) pour effectuer une commutation de blocage de lumière ; le corps principal (52) est pourvu de deux trous (51) qui sont respectivement rivetés à la structure de connexion (341) du premier élément de connexion (32) et du second élément de connexion (33), et la structure de blocage de lumière en forme d'arc (53) a une partie réfléchissante concave (531) ;
dans lequel l'élément de blocage de lumière (50), comprenant son corps principal (52) ayant des trous (51) et sa structure de blocage de lumière en forme d'arc (53) ayant une partie réfléchissante concave (531), est une unité monobloc en plastique, et une surface de l'élément de blocage de lumière (50) est pourvue d'un revêtement de barrière thermique ; et dans lequel le revêtement de barrière thermique comprend un premier revêtement métallique (54) disposé sur une surface de l'élément de blocage de lumière (50), et un second revêtement métallique (55) disposé sur le premier revêtement métallique (54).

2. Le dispositif de conversion optique (100) selon la revendication 1, dans lequel le revêtement de barrière thermique a une épaisseur comprise entre 16 microns et 60 microns.

3. Le dispositif de conversion optique (100) selon la revendication 1, dans lequel le premier revêtement métallique (54) est une couche de cuivre, et le second revêtement métallique (55) est une couche de nickel ou une couche de chrome.

4. Le dispositif de conversion optique (100) selon la revendication 1, dans lequel le revêtement de barrière thermique comprend en outre un troisième revêtement métallique (56) disposé sur le second revêtement métallique (55).

5. Le dispositif de conversion optique (100) selon la revendication 4, dans lequel le premier revêtement métallique (54) est une couche de cuivre, le second revêtement métallique (55) est une couche de nickel et le troisième revêtement métallique (56) est une couche de chrome.

6. Le dispositif de conversion optique (100) selon la revendication 5, dans lequel la couche de cuivre a une épaisseur de 20 microns à 40 microns, la couche de nickel a une épaisseur de 10 microns à 20 microns et la couche de chrome a une épaisseur de 2 microns à 4 microns.

7. Le dispositif de conversion optique (100) selon la revendication 5, dans lequel la couche de cuivre a une épaisseur de 20 microns à 25 microns.

8. Le dispositif de conversion optique (100) selon la revendication 5, dans lequel la couche de nickel a une épaisseur de 12 microns à 18 microns.

9. Le dispositif de conversion optique (100) selon la revendication 5, dans lequel la couche de chrome a une épaisseur de 2 microns à 3 microns.

10. Le dispositif de conversion optique (100) selon la revendication 1, dans lequel le boîtier (10) comprend une partie de corps principal (11) et deux parties de bras (12) s'étendant respectivement à partir des deux extrémités de la partie de corps principal (11), les deux parties de bras (12) et la partie de corps principal (11) forment une forme en U ; le dispositif de conversion optique (100) comprenant en outre :
un mécanisme rotatif (30) couplé entre les deux parties de bras (12), le mécanisme rotatif (30) tournant par rapport aux deux parties de bras (12) ; l'élément de blocage de lumière (50) étant monté sur le mécanisme rotatif (30) et rotatif par rapport aux deux parties de bras (12) avec le mécanisme rotatif (30) ; et un mécanisme d'entraînement (70) monté sur la partie de corps principal (11), le mécanisme d'entraînement (70) étant destiné à entraîner le mécanisme rotatif (30) pour tourner par rapport aux deux parties de bras (12).

11. Un dispositif de conversion optique (100) selon la revendication 10, dans lequel chacune des deux parties de bras (12) comprend une première plaque de montage (13) et une seconde plaque de montage (14), et la première plaque de montage (13) et la seconde plaque de montage (14) sont connectées et forment une partie courbée, la seconde plaque de montage (14) est couplée au mécanisme rotatif (30), et la première plaque de montage (13) est destinée à monter le boîtier (10) sur un réflecteur d'une lampe de véhicule.

12. Le dispositif de conversion optique (100) selon la revendication 10, dans lequel la partie de corps principal (11) et les deux parties de bras (12) forment un corps entier d'une seule pièce.

13. Le dispositif de conversion optique (100) selon la revendication 1, dans lequel :
le boîtier (10) est de forme annulaire ayant un trou traversant (102), et comprend une partie de corps principal (11) et une partie de connexion (101), et deux extrémités de la partie de connexion (101) sont respectivement connectées aux deux extrémités de la partie de corps principal (11) pour former le trou traversant (102) entre la partie de corps principal (11) et la partie de connexion (101) ;
les deux extrémités de la partie de connexion (101) sont pourvues respectivement d'une plaque de montage (104), et la plaque de montage (104) s'étend le long de la direction du trou traversant (102) ;
le dispositif de conversion optique (100) comprenant en outre un mécanisme rotatif (30) couplé entre les deux plaques de montage (104), le mécanisme rotatif (30) pouvant tourner par rapport aux deux plaques de montage (104) ; l'élément de blocage de lumière (50) étant monté sur le mécanisme rotatif (30) et pouvant tourner par rapport aux deux plaques de montage (104) avec le mécanisme rotatif (30) ; et
un mécanisme d'entraînement (70) monté sur la partie du corps principal (11) pour entraîner le mécanisme de rotation (30) pour tourner par rapport aux deux plaques de montage (104).

14. Le dispositif de conversion optique (100) selon la revendication 13, dans lequel la partie de corps principal (11) et la partie de connexion (101) forment un corps entier d'une seule pièce.
